# EUROPÄISCHE PATENTSCHRIFT

(11) **EP 1 920 355 B1**
(45) Veröffentlichungstag und Bekanntmachung des Hinweises auf die Patenterteilung: **21.10.2009**
(21) Anmeldenummer: 06776494.4
(22) Anmeldetag: 28.07.2006
(51) Int. Cl.: G06F 17/21

(54) **VERFAHREN ZUR ANORDNUNG VON SEITEN EINES DRUCKWERKS AUF FALZBÖGEN UND VERFAHREN ZUM ABBILDEN EINER HERSTELLUNG EINES DRUCKWERKS**
METHOD FOR ARRANGING PAGES OF A PRINTED WORK ON SIGNATURES, AND METHOD FOR REPRESENTING A PRODUCTION OF A PRINTED WORK
PROCEDE POUR DISPOSER DES PAGES D'UN TRAVAIL D'IMPRESSION SUR DES FEUILLETS ET PROCEDE POUR REPRESENTER UNE PRODUCTION D'UN TRAVAIL D'IMPRESSION

(30) Priorität: 30.08.2005 DE 102005041164
(43) Veröffentlichungstag der Anmeldung: 14.05.2008
(73) Patentinhaber: Hiflex Software GesmbH, 1090 Wien (AT)
(72) Erfinder: REICHHART, Dieter, 52249 Eschweiler (DE)
(74) Vertreter: Bauer, Dirk
(86) Internationale Anmeldenummer: PCT/EP2006/007523
(87) Internationale Veröffentlichungsnummer: WO 2007/025617

(56) Entgegenhaltungen:
- US-A1- 2003 128 392
- ANONYMOUS: "EUPRIMA Drehbuch zum prozessorientierten Datenaustausch mit ?Management-Information-Systems? unter dem Blickwinkel der vollvernetzten Druckerei V1.1, Anhang 2"[Online] 2003, XP002416628 Gefunden im Internet: URL:http://www.euprima.org/euprima_drehbuc h_v1_10.zip> [gefunden am 2007-01-25]
- ANONYMOUS: "JDF Specification Rel. 1.2" WWW.CIP4.ORG, [Online] 9. Mai 2004 (2004-05-09), Seiten 118-125, XP002416580 Gefunden im Internet: URL:http://www.cip4.org/documents/jdf_spec ifications/JDF1.2.pdf> [gefunden am 2007-01-24]
- ANSCHÜTZ ET AL: "The need of a fully automated workflow in the graphic arts industry" DIGITAL SMART FACTORY, 30. Juni 2001 (2001-06-30), Seiten 1-5, XP002213852

## Beschreibung

Die Erfindung betrifft zunächst ein Verfahren zur Anordnung von Seiten eines Druckwerks auf Falzbögen, die anschließend auf Druckbögen zu einem Ausschießschema zusammengeführt werden, wobei die Druckbögen zur Herstellung des Druckwerks zunächst mit den Seiten bedruckt und sodann in die Falzbögen geschnitten, anschließend die Falzbögen gefalzt und geschnitten und zu den Druckwerken zusammengetragen werden.

Zur Herstellung eines mehrseitigen Druckwerks in allgemein bekannten Druckverfahren, beispielsweise im Offset-, Hoch-, Tief-, Flexo- oder Digitaldruck werden mehrere Seiten gemeinsam auf einem großformatigen Druckbogen gedruckt. Beispielsweise kann eine 16-seitige Zeitschrift im DIN-Format A4 auf einem einzelnen Druckbogen in dem Standardformat 63 x 88 cm (doppelseitig) gedruckt werden.

Mit dem Oberbegriff "Bogen" wird im Rahmen der Herstellung eines Druckwerks die plane Papierware in verschiedenen Erscheinungsformen bezeichnet: Ein "Rohbogen" aus dem Papierlager wird gegebenen Falls auf ein für die Druckmaschine verarbeitbares Format zum "Druckbogen" beschnitten, der Druckbogen kann im weiteren Verlauf zu "Teilbögen" zerschnitten werden, Druck- oder Teilbögen werden als ;;Falzbögen" in der Falzmaschine gefalzt (oder "gebrochen"), zu einem "Rohblock" gegebenen Falls zusammengetragen, der schließlich im Sammelhefter oder im Klebehefter an einer Kante ("im Bund") geheftet und an den übrigen Kanten ("im Block") geschnitten wird.

Durch Variationen dieses Grundprinzips entsteht die bekannte Vielfalt gebundener Druckwerke: Beispielsweise kann der Block zur Herstellung einer Illustrierten mit einem Umschlag aus einem schwereren, aufwändiger bedruckten Papier versehen werden, zur Herstellung eines Buchs werden mehrere Rohblöcke durch Fadenheftung an einen gemeinsamen Rücken gebunden.

Ein Falzbogen wird gefalzt durch Kreuzbruch oder Parallelfalz. Beim Kreuzbruch erfolgt jeder weitere Bruch des Bogens quer, beim Parallelbruch parallel zum Vorangehenden. Beim Zickzack- oder Leporellofalz erfolgen die Brüche parallel und in wechselnder Richtung, beim Wickelfalz liegen die Falzbrüche parallel und das Papier wird aufgewickelt. Eine Kombination von Kreuzbruch und Parallelfalzung wird als Gemischtfalzung bezeichnet. Beim Falzen sind die Laufrichtung des Papiers und insbesondere die Grammatur (das Papiergewicht) zu beachten: Ein Vierbruchfalz (für eine Buchbindung) wird im Allgemeinen bis zu 80 g, ein Dreibruchfalz bis zu 150 g, ein Zweibruchfalz bis zu 200 g und ein Einbruchfalz noch bis zu einer Grammatur von 500 g ausgeführt.

Durch das Falzen und Brechen wird der Bogen zeilen- und spaltenweise in Felder gegliedert. In diesen Feldern müssen die einzelnen Seiten des Druckwerks derart angeordnet werden, dass sie im Druckwerk in der gewünschten Folge (und in der richtigen Orientierung) erscheinen. Die für ein Druckwerk erforderliche Anordnung der Seiten auf dem Bogen kann beispielsweise durch in den Rohblock eingefügte Sonderbögen verändert werden. Beispiele für derartige Sonderbögen sind kartonierte Bögen mit heraustrennbaren Postkarten, Bögen aus Transparentpapier für mehrschichtig aufgebaute Grafiken oder Bögen mit einzelnen folierten, lackierten oder anderweitig speziell behandelten Seiten. Die Tätigkeit des Anordnens der Seiten wird als "ausschießen", die Anordnung auf dem Bogen als "Ausschießschema" bezeichnet.

Druckbögen und deren Ausschießschemata werden mittels allgemein bekannter, hoch spezialisierter CAD- ("Computer Aided Design"-) Systeme konstruiert. Gegenüber dem manuellen Entwurf bieten derartige Systeme eine Vielzahl von Vorteilen. Durch die Verknüpfung von Maßen bieten CAD-Systeme einerseits eine automatische Plausibilitätskontrolle, andererseits können bei der Änderung eines Maßes (beispielsweise des Seitenformats) verknüpfte Maße (beispielsweise die Breite eines Beschnittbereichs, die Lage oder Größe einer Markierung) automatisch nachgeführt werden. Insbesondere können Auschießschemata mit geringem Aufwand archiviert werden und stehen so als Grundlage für spätere ähnliche Anwendungen zur Verfügung.

Allgemein bekannte Verfahren zur Anordnung von Seiten eines Druckwerks auf Falzbögen greifen auf ein solches Archiv möglicher Ausschießschemata zurück. Ein neuer Auftrag zur Herstellung eines Druckwerks wird nach den bekannten Verfahren soweit möglich auf ein oder mehrere bekannte Ausschießschemata zurückgeführt. Die Anordnung der Seiten des Druckwerks auf den Falzbögen wird nach den bekannten Verfahren nicht getrennt von der Anordnung der Falzbögen auf dem Druckbogen betrachtet. Die bekannten Verfahren sind umso flexibler, je größer das zugrunde liegende Archiv der möglichen Ausschießschemata ist.

Die Erfindung betrifft weiterhin ein Verfahren zum Abbilden einer Herstellung eines Druckwerks in einer vernetzten grafischen Produktion, wobei ausgehend von einem Auftrag zur Herstellung des Druckwerks eine sich über das Druckwerk und Produktteile des Druckwerks bis zu Seiten des Druckwerks baumförmig verzweigende Produktstruktur abgebildet wird.

Ein solches Verfahren ist bekannt aus dem "Drehbuch zum prozessorientierten Datenaustausch mit ,Management-Informations-Systems' unter dem Blickwinkel der vollvernetzten Druckerei" (diese Schrift nimmt Bezug auf die zum Zeitpunkt der Anmeldung aktuelle Version 1.1) der "European Print Managementsystem Association" ("EUPRIMA", www.euprima.org), einer Vereinigung führender und innovativer Anbieter von MIS. Vorgeschlagen wird dort, gemäß der Philosophie des Konsortium "International Cooperation for the Integration of Processes in Prepress, Press and Postpress" ("CIP4-Konsortium", www.cip4.org) und der darauf basierenden Konzeption des "Job Definition Format" ("JDF") deren Datenstrukturen auch der Druckbogenkonstruktion zugrunde zu legen und Produktionsprozesse innerhalb der Datenstrukturen der Teilprodukte eines Auftrags, insbesondere bezogen auf den einem Auftrag zugeordneten Druckbogen zu definieren.

JDF und das "Job Messaging Format" ("JMF", eine Untermenge von JDF) sind allgemein bekannte, vom CIP4-Konsortium entwickelte und gepflegte Datenformate. Der Entwicklung von JDF liegt die Zielvorstellung zugrunde, im Rahmen einer vernetzten grafischen Produktion für alle Produktionsmöglichkeiten und Eventualitäten flexibel und ohne Einschränkungen die Kommunikation zwischen Druckerei, Designer, Werbeagentur, Auftraggeber von Drucksachen und Unterlieferanten von Auftragnehmern zu vereinheitlichen.

JDF-basiert auf der "Extensible Markup Language" ("XML"), einer gleichfalls allgemein bekannten, vom "World Wide Web Consortium" ("W3C", www.w3.org) entwickelten Metasprache zum Definieren von Dokumenttypen und soll nach der Intention des CIP4-Konsortiums nicht nur in allen Produktionsbereichen einer vernetzten Druckerei, insbesondere in Vertrieb, Kalkulation und Auftragsbearbeitung, Produktionsplanung und -steuerung, in der eigentlichen Produktion in Vorstufe, Druck, Druckweiterverarbeitung und Versand, in den Querschnittsbereichen Material- und Lagerwirtschaft, Finanz- und Lohnbuchhaltung, Controlling, Kostenrechnung und Qualitätssicherung als einheitliches Datenformat zur Beschreibung von Prozessen und Produkten dienen. Durch vertikale Integration von Daten einerseits des Produktionsprozesses und andererseits der kaufmännischen Bereiche soll JDF in einer einheitlichen, verständlichen und durchgängigen Datenshuktur eine hohe Transparenz aller Produktionsabläufe, eine standardisierte Dokumentation der relevanten Soll- und Istdaten und eine durchgängige Produktionssteuerung ermöglichen.

In einer JDF-Datenstruktur wird jeder einzelne Prozess zur Herstellung eines Druckwerks im Rahmen der Bearbeitung eines Auftrags in einem "Knoten" abgebildet. Die Knoten sind in einer Baumstruktur miteinander verknüpft, die sowohl das Druckwerk als auch den Prozess zu seiner Herstellung vollständig beschreiben soll. Jeder einzelne Prozessknoten wird durch seine Ein- und Ausgangsgrößen definiert: Die Eingangsgrößen sind hierbei die verwendeten Ressourcen und die für deren Einsatz erforderlichen Parameter. Eine als Ausgangsgröße eines Prozesses erstellte Ressource wird im weiteren Verlauf wiederum Eingangsgröße nachfolgender Prozessknoten. Das (aus XML übernommene) Konzept der sich hierarchisch verzweigenden Baumstruktur impliziert, dass in jedem Prozessknoten nur diejenigen Ressourcen bekannt sind, die in einem übergeordneten Knoten beschrieben sind. Der Zugriff auf eine Ressource, die als Ausgangsgröße eines Prozessknoten in einem parallelen "Zweig" der Baumstruktur erstellt wird, erfolgt über eine allgemein - und damit auch-von den betreffenden beiden Knoten - zugreifbare Datenstruktur.

Da Druck- und Falzbögen nach dem bekannten Verfahren als Teilstruktur eines Druckwerks betrachtet werden, können diese auch nicht entsprechend den im Herstellprozess gegebenen Möglichkeiten anderweitig kombiniert werden. Beispielsweise können nicht Teile (einzelne Falzbögen oder Produktteile) unterschiedlicher Aufträge gemeinsam auf einem Druckbogen gedruckt werden.

### Aufgabe

Der Erfindung liegt die Aufgabe zugrunde, ein variableres Verfahren zum Anordnen von Seiten auf Fatzbögen vorzuschlagen sowie ein Verfahren zum Abbilden eines Auftrags, dass diese variablere Anordnung von Seiten auf Falzbögen unterstützt.

Aus XP 002416628 und XP 002416580 bekannt sind dazu Verfahren der EUPRIMA offenbart.

### Lösung

Ausgehend von den bekannten Ausschießverfahren wird nach der Erfindung vorgeschlagen, dass zunächst die Seiten Aufteilungen der Druckwerke zugeordnet werden, wobei in einer Aufteilung enthaltene Seiten des Druckwerks von einander entweder nicht oder nur durch einen letzten Beschnitt des Druckwerks getrennt werden, und dass die Aufteilungen auf den Falzbögen angeordnet werden.

Anders als nach dem auf den JDF-Datenstrukturen basierenden, von EUPRIMA vorgeschlagenen Verfahren werden nach der Erfindung für die Druckbogenkonstruktion Seiten nicht ausgehend von ihrer Eigenschaft als physischer Teil eines Druckbogens verwaltet, der wiederum einem Auftrag zugeordnet ist. Stattdessen werden den Seiten übergeordnete Aufteilungen als zunächst ausgehend von dem Herstellungsprozess kleinste Einheiten ermittelt und zur Konstruktion der Falzbögen und darauf basierend der Druckbögen verwendet.

Diese am Herstellungsprozess orientierte Sicht-die "Aufteilung" nach der obigen Definition ist bezogen auf die Herstellung quasi das unteilbare "Atom" des Druckwerks - und eine darauf aufbauende Daten- und Prozessstruktur ermöglicht erstmals unabhängig von umfangreichen Katalogen für mögliche Druckbögen für nahezu beliebige Druckwerke die automatische Anordnung der Seiten auf Falzbögen und damit letztlich eine vollständige Automatisierung der Druckbogenkonstruktion.

Besonders bevorzugt wird basierend auf einem erfindungsgemäßen Verfahren aus verschiedenen möglichen Anordnungen der Aufteilungen auf Falzbögen und Falzbögen auf Druckbögen eine kostenoptimierte Anordnung gewählt. Die Kostenoptimierung kann einerseits zur Bestimmung einer optimalen Anordnung anhand von individuell vorgefertigten Entscheidungstabellen erfolgen und andererseits eine vergleichende Betrachung mehrerer "durchgerechneter" Vorschläge umfassen. Die Kostenoptimierung kann insbesondere im Rahmen einer so genannten "Produktionsoptimierung" die möglichst weitgehende Vermeidung von Arbeitsschritten umfassen, die aus Erfahrungswerten oder nach statistischer Auswertung vorheriger Arbeiten als besonders fehlerträchtig oder die vorrangige Ausführung von Arbeitsschritten, die als besonders fehlerfrei gelten.

Insbesondere wird im Rahmen einer Kostenoptimierung vorzugsweise eine Anordnung derart gewählt, dass der Abfall minimiert wird und/oder dass vorgegebene Qualitätsanforderungen erreicht werden. Die Optimierung hinsichtlich der Papiernutzung trägt der Tatsache Rechnung, dass bei umfangreicheren Druckaufträgen die Papierkosten den weitaus größten Kostenfaktor bilden und eine Reduktion der Papierkosten nahezu unmittelbar eine Reduktion der Gesamtkosten - oder eine Steigerung des Profits bedeutet. Qualitätsanforderungen an ein Druckwerk können insbesondere die Anzahl oder die Art der Brüche einschränken: Beispielsweise entstehen im Kreuzbruch durch die stärkere Verdrängung der innersten gegenüber der äußersten Lage des Bogens mehr oder weniger erkennbare "Quetschfalten", die beispielsweise bei einem Fahrplan eher toleriert werden, als bei einem Geschäftsbericht.

Im Rahmen eines erfindungsgemäßen Verfahrens werden vorteilhafter Weise die möglichen Anordnungen der Aufteilungen auf Falzbögen und Falzbögen auf Druckbögen mit einer Mehrzahl von Bogenformaten ermittelt. Eine Optimierung unter Berücksichtigung aller am Lager verfügbaren oder mit den verfügbaren Maschinen zu verarbeitenden Bogenformate ermöglicht den sinnvolle Einsatz des erfindungsgemäßen Verfahrens auch im Kontext großer grafischer Betriebe mit mehreren verschiedenen Produktionslinien.

Ein erfindungsgemäßes Verfahren kann darüber hinaus die Option vorsehen. dass zur Herstellung einer Mehrzahl von Druckwerken Aufteilungen auf Falzbögen und Falzbögen auf Druckbögen unabhängig von ihrer Zugehörigkeit zu den Druckwerken angeordnet werden. Neben der Herstellung verschiedener - beispielsweise sprachen- oder länderspezifischer - Varianten kann so insbesondere bei spezialisierten grafischen Betrieben, die regelmäßig in Bezug auf Papiersorten, Farbanzahl und Auflage ähnliche Druckwerke herstellen, der Rohstoff Papier effektiver genutzt werden.

Ausgehend von den bekannten Verfahren zur Darstellung wird nach der Erfindung vorgeschlagen, dass hierarchisch den Produktteilen unter- und den Seiten übergeordnete Aufteilungen abgebildet werden, wobei in den Aufteilungen enthaltene Seiten des Druckwerks im Rahmen der Herstellung von einander entweder nicht oder nur durch einen letzten Beschnitt des Druckwerks getrennt werden.

Eine erfindungsgemäße Abbildung der Herstellung eines Druckwerks in einer Datenstruktur ermöglicht die-Ausfiihrung des-oben beschriebenen Verfahrens und hiermit insbesondere die automatisierte Bestimmung der Anordnung der Seiten eines Druckwerks auf Falzbögen und die Berechnung eines Ausschießschemas im Rahmen des Kalkulationsmoduls eines MIS.

Bevorzugt werden im Rahmen einer erfindungsgemäßen Abbildung Druckbögen, aus den Druckbögen geschnittene Teilbögen und/oder aus den Druckbögen und/oder den Teilbögen bestehende Falzbögen sowie das aus den Teilbögen.und/oder Druckbögen zusammengetragene Druckwerk netzförmig verknüpft abgebildet. Die Darstellung einer solchen netzförmigen Struktur im Rahmen einer JDF-Datei mit der XML-typischen sequentiellen Baumstruktur ist prinzipbedingt systemwidrig. Eine solche erfindungsgemäße grafische Darstellung eines Auftrags ermöglicht die für ein MIS als zentrales steuerndes Element im Herstellungsprozess wesentliche Visualisierung der gegenüber der rein produktortientierten Sicht des Auftraggebers eines Druckwerks eher prozessorientierten Sicht der ausführenden grafischen Betriebe.

In einer erfindungsgemäßen grafischen Abbildung eines Auftrags werden besonders bevorzugt in der Produktstruktur die-Aufteilungen mit den Druckbögen-verknüpft. In der kundenorientierten Sicht der Produktstruktur wie auch in der herstellungsorientierten Sicht des Ablaufs stellen die Aufteilungen rein virtuelle Größen dar: Für den Kunden ist am fertigen Produkt die Herstellung eines Produktteils in mehreren Aufteilungen nicht mehr erkennbar. In der Herstellung treten die Aufteilungen zwar irgendwann (in der Regel am Eingang des Hefters oder Binders) tatsächlich als konkretes-separates Objekt zu Tage, nicht jedoch (wie in der Abbildung) als "Eingangsgröße" der Druckbögen. Dennoch ermöglicht der Begriff der "Aufteilung" - dessen konkrete Bedeutung für den Kunden wie auch aus Sicht der Herstellung gleichermaßen leicht zu verstehen ist - und seine Abbildung an der Schnittstelle zwischen den Darstellungen der Produktstruktur und des Ablaufs eine intuitiv besonders gut erfassbare Darstellung der Zusammenhänge in einer komplexen vernetzten grafischen Produktion.

### Ausführungsbeispiel

Die Erfindung wird nachfolgend anhand eines Ausführungsbeispiels erläutert. Es zeigen
- Fig. 1a: eine Produktstruktur und
- Fig. 1b: einen ersten Ablauf der Herstellung,
- Fig. 2a: eine erste Aufteilung und
- Fig. 2b: einen ersten Falzbogen,
- Fig. 3a: eine zweite Aufteilung und
- Fig. 3b: einen zweiten Falzbogen,
- Fig. 4: eine Auswahl von Druckbogenlayouts,
- Fig. 5: ein erstes Ausschießschema,
- Fig. 6a: einen zweiten Ablauf der Herstellung und
- Fig. 6b: ein zweites Ausschießschema.

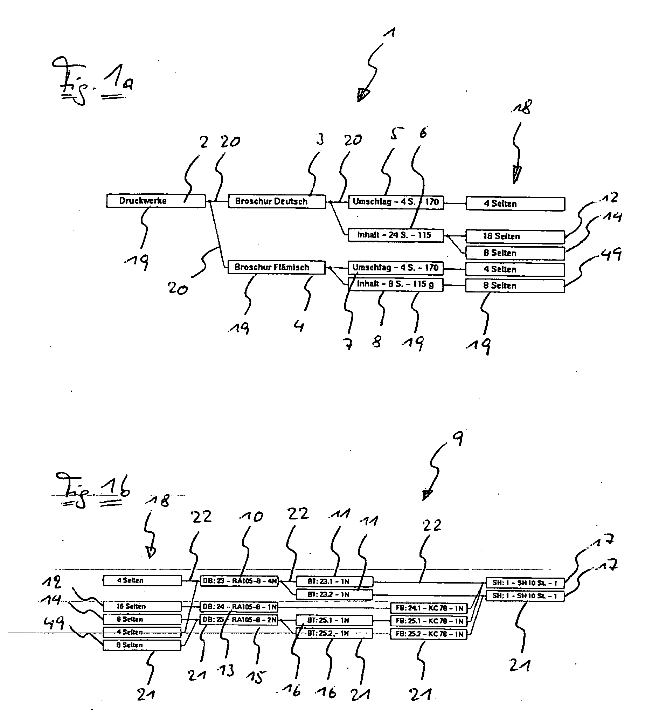

Gemäß dem in Figur 1a erfindungsgemäß dargestellten, baumartig verzweigten ersten Teil einer Produktstruktur 1 umfasst ein Auftrag 2 "Druckwerke" die Herstellung zweier Druckwerke 3, 4 für unterschiedliche Empfängergruppen. Das Druckwerk 3 "Broschur Deutsch" weist einen vierseitigen Produktteil 5 "Umschlag" und einen 24-seitigen Produktteil 6 "Inhalt" auf. Das Druckwerk 4 "Broschur Flämisch" weist einen gleichfalls vierseitigen Produktteil 7 "Umschlag" und einen achtseitigen Produktteil 8 "Inhalt" auf.

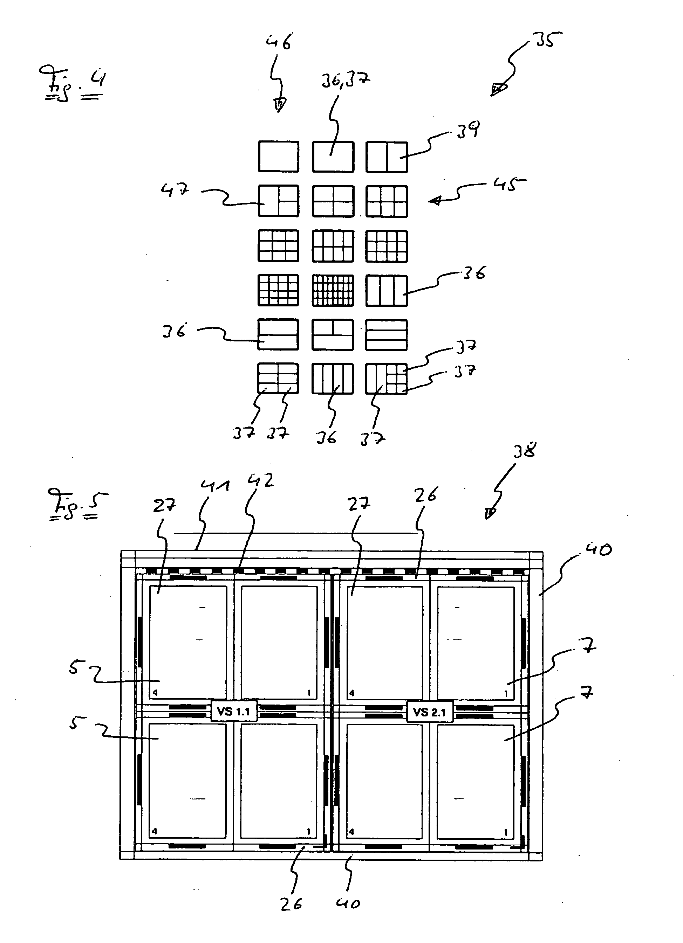

Im Rahmen der Kalkulation des Auftrags 2 mittels eines MIS wird automatisch der in Figur 1b dargestellte Ablauf 9 zur Herstellung der Druckwerke 3, 4 vorgeschlagen: Die Produktteile 5, 7 "Umschlag" der beiden Druckwerke 3, 4 werden in jeweils zwei Stücken auf einem gemeinsamen - im Detail im Folgenden anhand von Figur 5 dargestellten - Druckbogen 10 (mit Vierfach-Nutzen) gedruckt und in Teilbögen 11 mit jeweils einem Nutzen geschnitten. Eine erster 16-Seiter -12 des Produktteils 6 "Inhalt" des Druckwerks 3 "Broschur Deutsch" wird als Einfachnutzen auf einem separaten Druckbogen 13 gedruckt und anschließend gefalzt. Ein weiterer Achtseiter 14 mit dem Rest des Produktteils 6 "Inhalt" des Druckwerks 3 "Broschur Deutsch" wird gemeinsam mit dem Achtseiter 49 des Produktteil 8 "Inhalt" des Druckwerks 4 "Broschur Flämisch" auf einem dritten Druckbogen 15 gedruckt und anschließend in zwei Teilbögen 16 geschnitten, die dann gefalzt und gemeinsam mit den Teilbögen 11 aus den Produktteilen 5, 7 "Umschlag" auf einem Sammelhefter zu Rohblöcken 17 zusammengetragen und geheftet werden. Durch abschließenden Beschnitt auf dem Sammelhefter werden die Druckwerke 3, 4 fertig gestellt.

Als Aufteilungen 18, also Einheiten, die gemäß dem Vorschlag aus der Kalkulation im Rahmen der Herstellung der Druckwerke 3, 4 vor dem abschließenden Beschnitt der Rohblöcke 17 voneinander nicht getrennt werden, sind die Teilbögen 11 der. Produktteile 5, 7 "Umschlag" und die Falzbögen der Produktteile 6, 8 "Inhalt" in der Produktstruktur 1 gemäß Figur 1a als Teile der Druckwerke 3, 4 und andererseits im Ablauf 9 gemäß Figur 1b als Bausteine der Druckbögen dargestellt. Die Produktstruktur 1 gemäß Figur 1a einerseits und der Ablauf 9 gemäß Figur 1b andererseits werden (in nicht dargestellter Weise) in der grafischen Oberfläche des MIS als eine fortlaufende netzplanartige Abbildung unmittelbar ineinander übergehend dargestellt.

Die Produktstruktur 1 verzweigt sich baumartig: Die den Auftrag 2, die Druckwerke 3, 4, die Produktteile 5,6,7,8 repräsentierenden Knoten 19 sind "1-n"-verknüpft, weisen also (höchstens) eine eingehende und beliebig viele (auch: keine) ausgehende Verknüpfungen 20 mit einem anderen Knoten 19 auf. Der Ablauf 9 weist dagegen eine ausgehend von den Aufteilungen 18 (als "Quellen") bis zu den Rohblöcken 17 (als "Senken") netzförmige Struktur auf, deren Knoten 21 "n-m"-verknüpft sind, also eine jeweils von einander unabhängige Anzahl ein- und ausgehender Verknüpfungen 22 (wiederum auch: keine) aufweisen können.

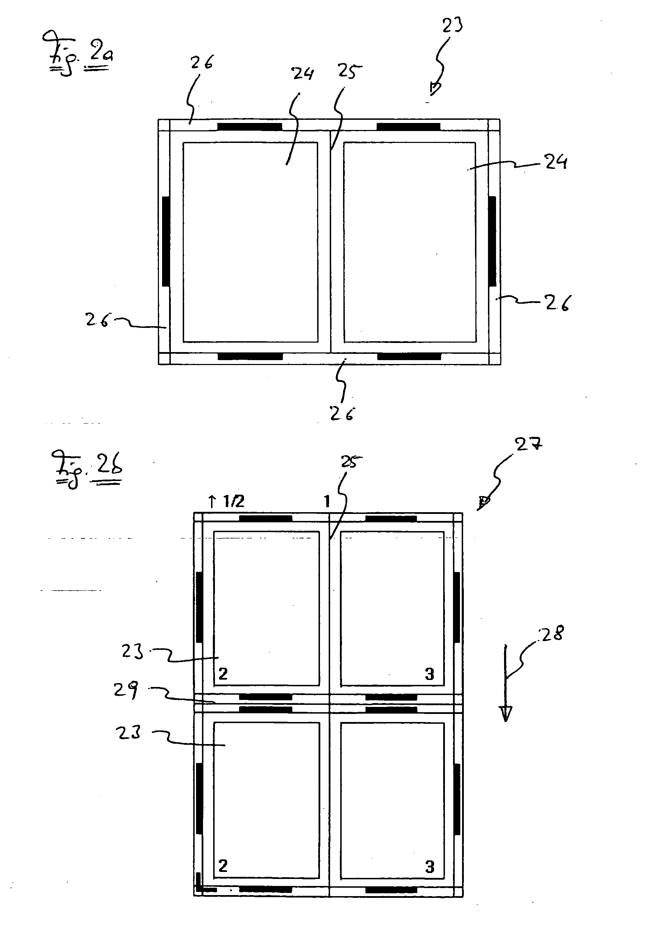

Figur 2a zeigt eine Aufteilung 23 mit zwei jeweils doppelseitig zu bedruckenden Seiten 24, einem zwischen diesen angeordneten Bund 25 und einem allseits umlaufenden Beschnitt 26. Diese Aufteilung 23 repräsentiert den Produktteil 7 "Umschlag" des Druckwerks 4 "Broschur Flämisch". Figur 2b zeigt einen aus zwei der vorgenannten Aufteilungen 23 zusammengesetzten Teilbogen 27. Die beiden Aufteilungen 23 sind in Laufrichtung 28 hinter einander in gleicher Orientierung auf dem Teilbogen 27 angeordnet, werden zunächst an der Trennlinie 29 zwischen ihnen geschnitten und im Sammelhefter auf einem Falzanleger im Bund 25 gefalzt.

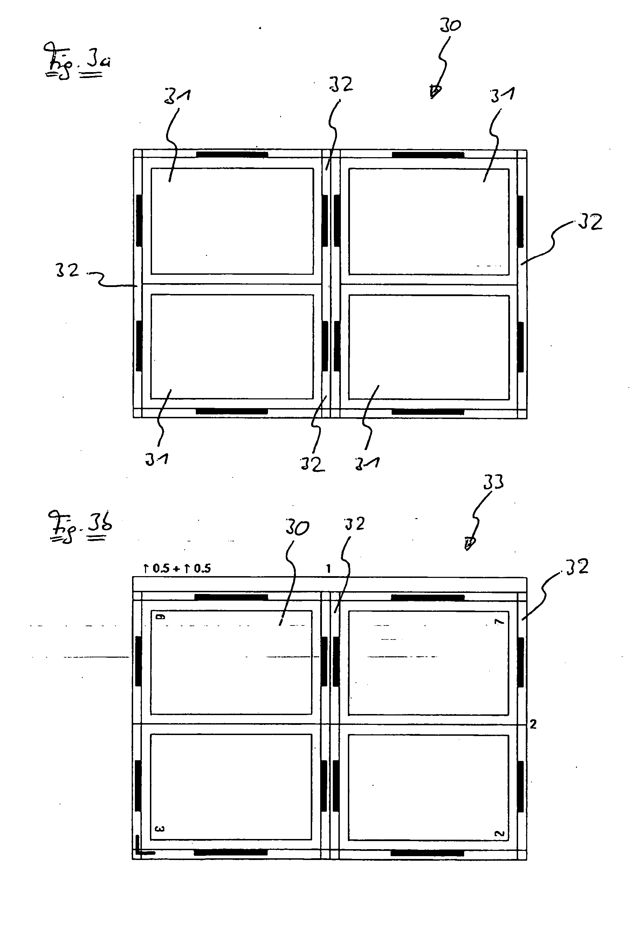

Figur 3a zeigt eine zweite Aufteilung 30 mit vier jeweils doppelseitig zu bedruckenden Seiten 31, die jeweils einen umlaufenden Beschnitt 32 aufweisen. Diese Aufteilung 30 repräsentiert den Produktteil 8 "Inhalt" des Druckwerks 4 "Broschur Flämisch". Figur 3b zeigt einen mit einer solchen Aufteilung 30 gemäß Figur 3a belegten Falzbogen 33 im Kreuzbruch. Der Falzbogen 33 weist zusätzlich zu dem bereits in der Aufteilung 30 enthaltenen umlaufenden Beschnitt 32 einen Überfalz 34 auf.

Figur 4 zeigt eine Auswahl 35 von vordefinierten Druckbogenlayouts 36, die in dem MIS hinterlegt ist. Die Druckbogenlayouts 36 weisen jeweils eine rechteckige Form auf und sind in Felder 37 unterteilt. Zur Erstellung des in Figur 5 im Detail dargestellten Auschießschemas 38 sind entsprechend dem rechts oben in der Auswahl 35 gemäß Figur 4 gezeigten Druckbogenlayout 39 zwei Teilbögen 27 gemäß Figur 2b mit je einem Produktteil 5, 7 "Umschlag" der beiden Druckwerke 3, 4 auf dem ersten Druckbogen 10 angeordnet, der neben dem für die Teilbögen 27 definierten Beschnitt 26 einen weiteren umlaufenden Beschnitt 40 aufweist, der unter anderem einen entlang einer Längsseite 41 des Druckbogens 10 angeordneten Farbkalibrierstreifen 42 aufnimmt.

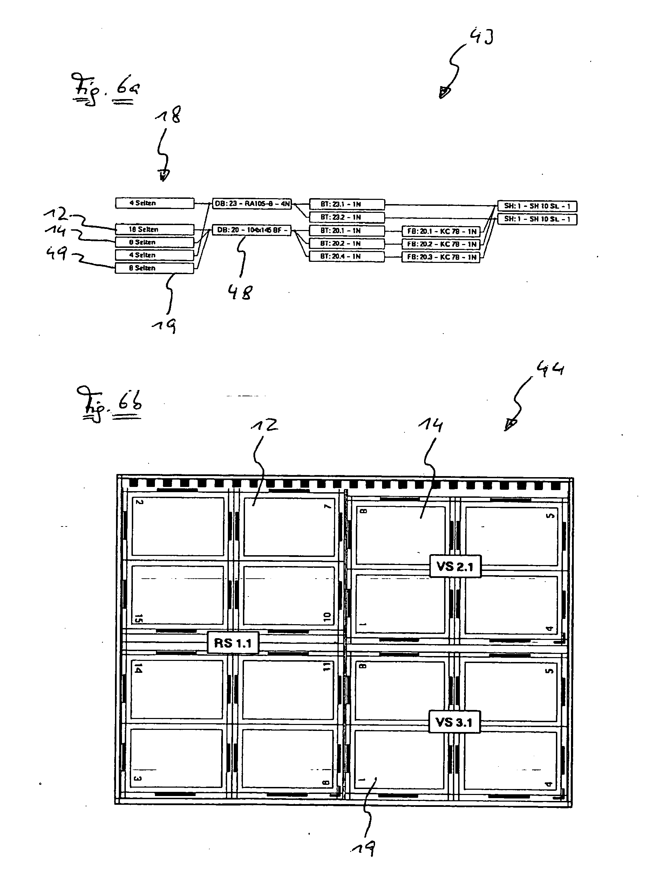

Figur 6a zeigt einen manuell erstellten alternativen Ablauf 43 zur Herstellung der Druckwerke 3, 4, nach dem in Abänderung des von dem MIS automatisch generierten Vorschlags alle Aufteilungen 12, 14, 19 der Produktteile 6, 8 "Inhalt" der beiden Druckwerke 3, 4 zusammen in dem in Figur 6b gezeigten Ausschießschema 44 entsprechend dem in der zweiten Zeile 45, erste Spalte 46 der Auswahl 35 gemäß Figur 4 gezeigten Druckbogenlayout 47 auf einem gemeinsamen Druckbogen 48 gedruckt werden.

In den Figuren sind
- 1: Produktstruktur
- 2: Auftrag
- 3: Druckwerk "Broschur Deutsch"
- 4: Druckwerk "Broschur Flämisch"
- 5: Produktteil "Umschlag"
- 6: Produktteil "Inhalt"
- 7: Produktteil "Umschlag"
- 8: Produktteil "Inhalt"
- 9: Ablauf
- 10: Druckbogen
- 11: Teilbogen
- 12: 16-Seiter
- 13: Druckbogen
- 14: Achtseiter
- 15: Druckbogen
- 16: Teilbogen
- 17: Rohblock
- 18: Aufteilung
- 19: Knoten
- 20: Verknüpfung
- 21: Knoten
- 22: Verknüpfung
- 23: Aufteilung
- 24: Seite
- 25: Bund
- 26: Beschnitt
- 27: Teilbogen
- 28: Laufrichtung
- 29: Trennlinie
- 30: Aufteilung
- 31: Seite
- 32: Beschnitt
- 33: Falzbogen
- 34: Überfalz
- 35: Auswahl
- 36: Druckbogenlayout
- 37: Feld
- 38: Ausschießschema
- 39: Druckbogenlayout
- 40: Beschnitt
- 41: Längsseite
- 42: Farbkalibrierstreifen
- 43: Ablauf
- 44: Ausschießschema
- 45: Zeile
- 46: Spalte
- 47: Druckbogenlayout
- 48: Druckbogen
- 49: Achtseiter

## Patentansprüche

1. Verfahren zur Anordnung von Seiten (31) eines Druckwerks (3, 4) auf Falzbögen (33), die anschließend auf Druckbögen zu einem Ausschießschema (38, 44) zusammengeführt werden, wobei die Druckbögen zur Herstellung des Druckwerks (3, 4) zunächst mit den Seiten (31) bedruckt und sodann in die Falzbögen (33) geschnitten, anschließend die Falzbögen (33) gefalzt und geschnitten und zu den Druckwerken (3, 4) zusammengetragen werden, ***dadurch gekennzeichnet, dass*** zunächst die Seiten (31) Aufteilungen (18, 30) der Druckwerke (3, 4) zugeordnet werden, wobei in einer Aufteilung (18, 30) enthaltene Seiten (31) des Druckwerks (3, 4) von einander entweder nicht oder nur durch einen letzten Beschnitt des Druckwerks (3, 4) getrennt werden, und dass die Aufteilungen (18, 30) auf den Falzbögen (33) angeordnet werden.

2. Verfahren nach dem vorgenannten Anspruch, ***dadurch gekennzeichnet, dass*** aus verschiedenen möglichen Anordnungen der Aufteilungen (18, 30) auf Falzbögen (33) und Falzbögen (33) auf Druckbögen eine kostenoptimierte Anordnung gewählt wird.

3. Verfahren nach dem vorgenannten Anspruch, ***dadurch gekennzeichnet, dass*** eine Anordnung derart gewählt wird, dass der Abfall minimiert wird und/oder dass vorgegebene Qualitätsanforderungen erreicht werden.

4. Verfahren nach einem der Ansprüche 2 oder 3, ***dadurch gekennzeichnet, dass*** die möglichen Anordnungen der Aufteilungen (18, 30) auf Falzbögen (33) und Falzbögen (33) auf Druckbögen mit einer Mehrzahl von Bogenformaten ermittelt werden.

5. Verfahren nach einem der vorgenannten Ansprüche, ***dadurch gekennzeichnet, dass*** zur Herstellung einer Mehrzahl von Druckwerken (3, 4) Aufteilungen (18, 30) auf Falzbögen (33) und Falzbögen (33) auf Druckbögen unabhängig von ihrer Zugehörigkeit zu den Druckwerken (3, 4) angeordnet werden.

## Claims

1. A method for arranging pages (31) of a printed work (3, 4) on folding sheets (33), which are subsequently joined into an imposition system (38, 44) on print sheets, wherein the print sheets for producing the printed work (3, 4) are initially printed with the pages (31) and subsequently cut into the folding sheets (33), after this the folding sheets (33) are folded and cut and compiled into the printed works (3, 4), **characterized in that** initially the pages (31) are assigned divisions (18, 30) of the printed works (3, 4), wherein pages (31) of the printed work (3, 4) contained in a division (18, 30) are either not divided from one another or only through a last trim of the printed work (3, 4) and that the divisions (18, 30) are arranged on the folding sheets (33).

2. The method according to the aforementioned claim **characterized in that** from various possible arrangements of the divisions (18, 30) on folding sheets (33) and folding sheets (33) on print sheets a cost-optimised arrangement is selected.

3. The method according to the aforementioned claim, **characterized in that** an arrangement is selected in such a manner that the waste is minimised and/or the preset quality requirements are attained.

4. The method according to any one of the Claims 2 or 3, **characterized in that** the possible arrangements of the divisions (18, 30) on folding sheets (33) and folding sheets (33) on print sheets are determined with a plurality of sheet formats.

5. The method according to any one of the preceding claims, **characterized in that** for producing a plurality of printed works (3, 4) divisions (18, 30) on folding sheets (33) and folding sheets (33) on print sheets are arranged irrespective of their belonging to the printed works (3, 4).

## Revendications

1. Procédé pour disposer des pages (31) d'un ouvrage d'impression (3, 4) sur des feuilles à plier (33) qui sont ensuite regroupées sur des feuilles d'impression en une maquette de mise en page (38, 44), pour la création de l'ouvrage d'impression, (3, 4), les feuilles d'impression étant d'abord imprimées avec les pages (31) puis coupées en feuilles à plier (33), les feuilles à plier (33) étant ensuite pliées et coupées et rassemblées en ouvrages d'impression (3, 4), **caractérisé en ce que** d'abord, on affecte les pages (31) à des divisions (18, 30) des ouvrages d'impression (3, 4), des pages (31) de l'ouvrage d'impression (3, 4) contenues dans une division (18, 30) n'étant soit pas séparées les unes des autres ou seulement par une dernière rognure de l'ouvrage d'impression (3, 4) et **en ce qu'**on dispose les divisions (18, 30) sur les feuilles à plier (33).

2. Procédé selon la revendication précédente, **caractérisé en ce qu'**à partir de différentes dispositions possible des divisions (18, 30) sur des feuilles à plier (33) et de feuilles à plier (33) sur des feuilles d'impression, on choisit une disposition optimale en matière de coûts.

3. Procédé selon la revendication précédente, **caractérisé en ce qu'**on choisit une disposition de sorte à minimiser les déchets et/ou de sorte à atteindre des exigences prédéfinies en matière de qualité.

4. Procédé selon l'une quelconque des revendications 2 ou 3, **caractérisé en ce que** les dispositions possibles des divisions (18, 30) sur des feuilles à plier (33) et des feuilles à plier (33) sur des feuilles d'impression sont recherchées avec une pluralité de formats de feuilles.

5. Procédé selon l'une quelconque des revendications précédentes, **caractérisé en ce que** pour la création d'une pluralité d'ouvrages d'impression (3, 4), on dispose des divisions (18, 30) sur des feuilles à plier (33) et des feuilles à plier (33) sur des feuilles d'impression, indépendamment de leur appartenance aux ouvrages d'impression (3, 4).
